# EUROPÄISCHE PATENTSCHRIFT

(11) **EP 4 094 957 B1**
(45) Veröffentlichungstag und Bekanntmachung des Hinweises auf die Patenterteilung: **12.02.2025**
(21) Anmeldenummer: 21212776.5
(22) Anmeldetag: 07.12.2021
(51) Int. Cl.: B60C 9/20, B60C 9/28, B60C 9/22

(54) **FAHRZEUGLUFTREIFEN MIT EINER BANDAGE**
PNEUMATIC VEHICLE TYRE WITH A BANDAGE
PNEUMATIQUES DE VÉHICULE DOTÉ D'UN BANDAGE

(30) Priorität: 25.05.2021 DE 102021205282
(43) Veröffentlichungstag der Anmeldung: 30.11.2022
(73) Patentinhaber: Continental Reifen Deutschland GmbH, 30175 Hannover (DE)
(72) Erfinder: Ludwig, Reinhard, 30165 Hannover (DE)
(74) Vertreter: Continental Corporation

(56) Entgegenhaltungen:
- EP-A1- 0 773 115
- EP-A1- 1 837 205
- EP-A1- 2 113 398
- EP-A2- 0 887 208
- DE-A1- 102014 224 497
- DE-A1- 102018 211 946
- DE-T5- 112014 002 101
- JP-A- 2005 225 398
- JP-A- 2007 161 026
- JP-A- H08 216 618
- US-A- 4 702 293
- US-A1- 2007 131 331

## Beschreibung

Die Erfindung betrifft einen Fahrzeugluftreifen aufweisend einen profilierten Laufstreifen, eine Karkasse sowie einen Gürtel aus zumindest einer Winkelgürtellage aufweisend parallel zueinander angeordnete Stahl-Festigkeitsträger, die einen ersten Winkel von 15° bis 50° mit einer Umfangsrichtung U einschließen.

Ein Fahrzeugluftreifen weist im Allgemeinen eine luftundurchlässige Innenschicht, eine Festigkeitsträger enthaltende Karkasse, die von einem Zenitbereich des Reifens über die Seitenwände bis in Wulstbereiche reicht und dort meist durch Umschlingen zugfester Wulstkerne verankert ist, einen radial außen befindlichen profilierten Laufstreifen und einen zwischen dem Laufstreifen und der Karkasse angeordneten Gürtel sowie eine Bandage.

Der aus zumindest einer Winkelgürtellage bestehende Gürtel sorgt für die Steifigkeit der Lauffläche in Längs- und Querrichtung. Dies dient beim Fahren der Kraftübertragung und ist wesentlich für ein vorteilhaftes Handlingverhalten. Übliche Festigkeitsträger für Winkelgürtellagen sind Stahl-Festigkeitsträger.

Die Bandage besteht in der Regel aus zumindest einem weitgehend in Umfangsrichtung U orientierten, in Umfangswindungen angeordneten und in elastomerem Material eingebetteten Bandagen-Festigkeitsträger und dient im Wesentlichen dazu, zusätzlich Kräfte in Umfangsrichtung aufzunehmen, um beispielsweise das Reifenwachstums aufgrund von Fliehkräften im Betrieb des Reifens zu begrenzen. Üblicherweise ist die Bandage radial außerhalb des Gürtels angeordnet.

Die EP 1 503 910 B1 offenbart einen Reifen aufweisend zwei übliche Winkelgürtellagen sowie zwei Bandagen mit Bandagen-Festigkeitsträgern aus Polyester. Eine erste Bandage ist wie üblich radial außerhalb der Winkelgürtellagen angeordnet. Eine zweite Bandage ist radial innerhalb der Winkelgürtellagen angeordnet.

Die JP 2007 161026 A, JP H08 216618 A, US 2007/131331 A1, EP 1 837 205 A1, EP 2 113 398 A1, US 4 702 293 A, EP 0 773 115 A1, EP 0 887 208 A2, JP 2005 225398 A, DE 10 2018 211946 A1 , DE 10 2014 224497 A1 und DE 11 2014 002101 T5 offenbaren weitere Fahrzeugluftreifen mit Gürtelpaketen.

Im Laufe der Reifennutzung können allerdings Risse in einem Profilgrund des profilierten Laufstreifens auftreten, der sich bis zu dem in Umfangswindungen angeordneten Bandagen-Festigkeitsträger der radial außerhalb der Winkelgürtellage angeordneten Bandage erstrecken kann. Hierdurch kann der zumindest eine Bandagen-Festigkeitsträger Wasser ziehen, welches durch seine Anordnung in Umfangswindungen rundführend verteilt wird und insbesondere bei geringer Unterprofilstärke zu einer Korrosion der Stahl-Festigkeitsträger des Gürtels, insbesondere rundführend unter den Profilrillen, führen kann. Dies beeinflusst das Handlingverhalten des Reifens negativ. Gegenmaßnahmen wie eine höhere Unterprofilstärke oder eine dickere Gürtelgummierung erhöhen jedoch den Rollwiderstand.

Aufgabe ist es somit, einen Fahrzeugluftreifen zur Verfügung zu stellen, der eine verbesserte Dauerhaltbarkeit aufweist.

Dies wird dadurch erreicht, dass der Fahrzeugluftreifen radial außerhalb der Karkasse genau eine Bandage aus zumindest einem in Umfangswindungen angeordneten, einen zweiten Winkel von maximal 10° mit der Umfangsrichtung U einschließenden und in elastomerem Material eingebetteten Bandagen-Festigkeitsträger aufweist und dass die Bandage radial innerhalb des Gürtels angeordnet ist und dass eine radial innerhalb auf die Bandage folgende Festigkeitsträgerlage eine Festigkeitsträgerlage der Karkasse ist. Radial zwischen der Bandage und der Karkasse ist somit keine weitere Festigkeitsträgerlage, insbesondere keine gemäß einer Winkel-Gürtellage ausgeführte Festigkeitsträgerlage, angeordnet. Weiter weist der Fahrzeugluftreifen eine Unterprofilstärke von 0,5 mm bis 2,0 mm auf.

Radial außerhalb des Gürtels aus der zumindest einen Winkelgürtellage ist der Fahrzeugluftreifen somit frei von in Umfangswindungen angeordneten, einen zweiten Winkel von maximal 10° mit der Umfangsrichtung U einschließenden, Festigkeitsträgern. Dringt im Laufe der Reifennutzung Feuchtigkeit insbesondere durch einen Riss in einer Profilrille in den Laufstreifen ein, so trifft dieser nicht direkt auf einen in Umfangswindungen angeordneten Bandagen-Festigkeitsträger, welcher die Feuchtigkeit rundführend über den gesamten Umfang des Reifens verteilen kann. Hierdurch ist eine rundführende Übertragung von Feuchtigkeit auf Stahl-Festigkeitsträger des Gürtels und damit eine rundführende Korrosion von Stahl-Festigkeitsträgern der Winkelgürtellage vermeidbar.

Aufgrund der winkeligen Anordnung der Stahl-Festigkeitsträger der zumindest einen Winkelgürtellage rosten die Stahl-Festigkeitsträger der zumindest einen Winkelgürtellage bei einem nur lokalen Feuchtigkeitseintrag nicht rundführend. Hierdurch ist ein Reifen zur Verfügung gestellt, eine verbesserte Dauerhaltbarkeit, insbesondere bezüglich rundführender Korrosion von Stahl-Festigkeitsträgern, aufweist.

Zudem hat es sich gezeigt, dass eine Anordnung der einzigen Bandage radial innerhalb des Gürtels die Hochgeschwindigkeitsleistung des Reifens nicht verringert.

Die Karkasse kann eine übliche Radialkarkasse mit zumindest einer Festigkeitsträgerlage aufweisend Festigkeitsträger, die mit der Umfangsrichtung U einen Winkel von 80° bis 90° und/oder in einem Bereich der Seitenwand einen Winkel von maximal 10° mit der radialen Richtung rR einschließen, sein.

Der zumindest eine Bandagen-Festigkeitsträger schließt wie für die Bandage üblich einen zweiten Winkel von maximal 10°, insbesondere maximal 5°, mit der Umfangsrichtung U ein.

Der zumindest eine Bandagen-Festigkeitsträger kann ein Kord oder ein Garn, bevorzugt ein Kord, sein. Ein "Garn" ist im Rahmen der vorliegenden Erfindung in Anlehnung an die DIN 60900 ein linienförmiges Gebilde, das aus einem Filament oder mehreren einzelnen Filamenten oder Fasern besteht. Bevorzugt sind die Filamente oder Fasern des Garns miteinander verdreht.

Im Rahmen der vorliegenden Erfindung stellen "Korde" linienförmige Gebilde dar, die aus zwei oder mehr miteinander endverdrehten Garnen bestehen. Ein "Hybridkord" stellt einen Kord dar, bei dem zumindest zwei unterschiedliche Garne miteinander endverdreht sind. Die zumindest zwei Garne unterscheiden sich dabei in ihrem Material.

Erfindungsgemäß weist der Fahrzeugluftreifen eine Unterprofilstärke von 0,5 mm bis 2,0 mm auf.

Durch die Beschränkung von in Umfangswindungen angeordneten Festigkeitsträgern auf radial innerhalb der zumindest einen Winkelgürtellage ist eine ausreichende Dauerhaltbarkeit bzgl. Korrosion auch bei einer geringen Unterprofilstärke von 0,1 mm bis 5,0 mm, bevorzugt von 0,5 mm bis 2,0 mm, besonders bevorzugt von in etwa 0,5 mm, ermöglicht, wodurch ein Reifen mit geringem Rollwiderstand bei gleichzeitig vorteilhafter Dauerhaltbarkeit realisierbar ist. Die Unterprofilstärke ist der minimale radiale Abstand zwischen einem Profilgrund und einer radial äußeren Einhüllenden der Stahl-Festigkeitsträger der radial äußersten Winkelgürtellage.

Im Folgenden werden vorteilhafte Ausgestaltungen und Weiterbildungen der Erfindung dargelegt.

Eine vorteilhafte Ausführungsform ist dadurch gegeben, dass eine radial äußerste Winkelgürtellage der zumindest einen Winkelgürtellage eine radial äußere Gummierungsdicke von maximal 0,5 mm, bevorzugt maximal 0,1 mm, aufweist.

Durch die Beschränkung von in Umfangswindungen angeordneten Festigkeitsträgern auf radial innerhalb der zumindest einen Winkelgürtellage ist eine ausreichende Dauerhaltbarkeit bzgl. Korrosion auch bei einer derart geringen radial äußeren Gummierungsdicke ermöglicht, wodurch ein Reifen mit geringem Rollwiderstand bei gleichzeitig vorteilhafter Dauerhaltbarkeit realisierbar ist.

Eine vorteilhafte Ausführungsform zeichnet sich dadurch aus, dass der zumindest eine Bandagen-Festigkeitsträger ein Stahl-Festigkeitsträger ist. Stahl-Festigkeitsträger sind kostengünstig und ermöglichen eine hohe Umfangssteifigkeit des Reifens. Ein geeigneter Stahl-Festigkeitsträger kann ein Stahl-Kord insbesondere aus mehreren miteinander verdrehten Stahl-Monofilamenten sein. Als geeignet hat sich beispielsweise ein 3x3x0,2mm HE (high-elongation) Stahl-Kord herausgestellt, der einer prozessbedingten Erhebung der Bandage und des Gürtels folgen kann.

Eine andere vorteilhafte Ausführungsform zeichnet sich dadurch aus, dass der zumindest eine Bandagen-Festigkeitsträger ein Hybrid-Festigkeitsträger, insbesondere ein Stahlhybrid-Festigkeitsträger oder ein Aramidhybrid-Festigkeitsträger, ist.

Der Einsatz von Hybrid-Festigkeitsträgern für die Bandage ermöglicht eine besonders gute Einstellbarkeit der Kraft-Dehnungseigenschaften. Der Hybrid-Festigkeitsträger weist dabei zumindest zwei voneinander unterschiedliche Materialien auf.

Ein Stahlhybrid-Festigkeitsträger weist dabei Stahl und ein weiteres Material auf. Bevorzugt handelt es sich um einen Stahlhybrid-Kord aus zumindest einem Stahlfilament und zumindest einem Garn aus einem weiteren bevorzugt textilen Material.

Ein Aramidhybrid-Festigkeitsträger weist dabei Aramid und ein weiteres Material auf. Bevorzugt handelt es sich um einen Aramidhybrid-Kord aus zumindest einem Aramid Garn und zumindest einem Garn aus einem weiteren Material.

Korde, insbesondere Stahlkorde oder textile Korde oder Hybridkorde, aus mindestens zwei Filamenten oder Garnen entwickeln bei Kontakt mit Wasser Kapillarkräfte. Die Anordnung der Bandage radial innerhalb des Gürtels verhindert den Kontakt der in Umfangswindungen angeordneten Bandagen-Festigkeitsträger mit Feuchtigkeit aus der Umwelt und damit das rundführende Rosten der Gürtelkorde.

Eine weitere andere vorteilhafte Ausführungsform zeichnet sich dadurch aus, dass der zumindest eine Bandagen-Festigkeitsträger ein Nylon-Festigkeitsträger ist.

Nylon ist ein kostengünstiger Bandagen-Festigkeitsträger. Bevorzugt handelt es sich um einen Nylon-Kord insbesondere der Konstruktion 470x2 oder 1400x2.

Eine vorteilhafte Ausführungsform ist dadurch gegeben, dass die Bandage in axialer Richtung aR durchgehend ausgebildet ist und axiale Enden aufweist, die jeweils axial innerhalb eines axialen Bereichs angeordnet sind, der sich jeweils von 5 mm axial innerhalb einer Kante der radial äußersten Winkelgürtellage bis 5 mm axial außerhalb einer Gürtelkante des Gürtels erstreckt.

Vorteilhaft ist es dabei, wenn die axialen Enden in einer axialen Entfernung von maximal 5 mm von der jeweiligen Gürtelkante des Gürtels und/oder der jeweiligen Kante der radial äußersten Winkelgürtellage angeordnet sind. Weist der Gürtel genau eine Winkelgürtellage auf, so sind die Kanten der radial äußersten Winkelgürtellage identisch mit den Gürtelkanten des Gürtels.

Eine vorteilhafte Ausführungsform ist dadurch gegeben, dass die Bandage einlagig ausgebildet ist, insbesondere ein einlagiges Spulbild aufweist. Hierdurch ist eine besonders kompakte Bandage mit einem geringen Rollwiderstandsbeitrag ermöglicht.

Eine vorteilhafte Ausführungsform ist dadurch gegeben, dass der Gürtel genau eine Winkelgürtellage aufweist, wobei der erste Winkel der Stahl-Festigkeitsträger 20° bis 50° beträgt.

Hierdurch ist ein besonders kompakter Gürtel erwirkt. Die radial äußerste Winkelgürtellage ist somit die einzige Winkelgürtellage des Gürtels.

Eine vorteilhafte Ausführungsform ist dadurch gegeben, dass der Gürtel genau zwei Winkelgürtellagen aufweist, wobei die Stahl-Festigkeitsträger der beiden Winkelgürtellagen eine gegenläufige Steigungsrichtung aufweisen und wobei der erste Winkel der jeweiligen Winkelgürtellage 15° bis 35° beträgt.

Die gegenläufigen Steigungsrichtungen ermöglichen eine symmetrische Anordnung der Stahl-Festigkeitsträger.

Vorteile ergeben sich vor allem für einen erfindungsgemäßen Nutzfahrzeugreifen.

Alle in dieser Beschreibung wiedergegebenen Ausführungsformen der erfindungsgemäßen Fahrzeugluftreifen stellen lediglich Beispiele der Ausgestaltung der Erfindung dar. Entsprechend sind auch durch einzelne oder mehrere Merkmale einer Ausführungsform alleine oder die Kombination der Merkmale verschiedene Ausführungsformen weitere Ausführungsformen der Erfindung gegeben, die Gegenstand der Erfindung sind, soweit diese nicht explizit anders in der Beschreibung erläutert wird.

Weitere Merkmale, Vorteile und Einzelheiten der Erfindung werden nun anhand der schematischen Zeichnungen, die Ausführungsbeispiele darstellen, näher erläutert.

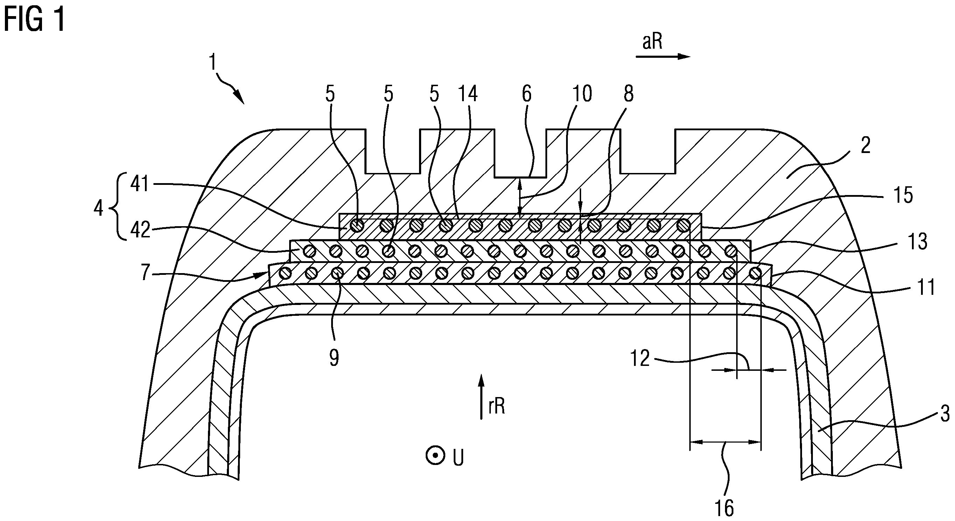

Dabei zeigt die
Fig. 1 einen erfindungsgemäßen Fahrzeugluftreifen.

Die Figur 1 zeigt einen Fahrzeugluftreifen 1, insbesondere einen Nutzfahrzeugreifen 1, aufweisend einen profilierten Laufstreifen 2, eine Karkasse 3 sowie einen Gürtel 4 aufweisend zumindest einer Winkelgürtellage 41,42 aufweisend parallel zueinander angeordnete Stahl-Festigkeitsträger 5, die einen ersten Winkel von 15° bis 50° mit einer Umfangsrichtung U einschließen. Konkret dargestellt ist, dass der Gürtel 4 genau zwei Winkelgürtellagen 5 aufweist, wobei die Stahl-Festigkeitsträger 5 der beiden Winkelgürtellagen 41, 42 eine gegenläufige Steigungsrichtung aufweisen und wobei der erste Winkel der jeweiligen Winkelgürtellage 41, 42 dabei 5° bis 35° beträgt. Alternativ kann der Gürtel 4 genau eine Winkelgürtellage 41, dann auch genannt eine radial äußerste Winkelgürtellage 41, aufweisen, wobei der erste Winkel der Stahl-Festigkeitsträger 5 dabei 20° bis 50° beträgt.

Der Reifen 1 zeichnet sich dadurch aus, dass der Fahrzeugluftreifen 1 radial außerhalb der Karkasse 3 genau eine Bandage 7 aus zumindest einem in Umfangswindungen angeordneten, einen zweiten Winkel von maximal 10°, insbesondere maximal 5°, mit der Umfangsrichtung U einschließenden, in elasomterem Material eingebetteten Bandagen-Festigkeitsträger 9 aufweist und dass die Bandage 7 radial innerhalb des Gürtels 4 angeordnet ist und dass eine radial innerhalb auf die Bandage 7 folgende Festigkeitsträgerlage eine Festigkeitsträgerlage der Karkasse 3 ist. Radial zwischen der Karkasse 3 und der Bandage 7 ist somit keine weitere Festigkeitsträgerlage angeordnet.

Der Fahrzeugluftreifen weist eine Unterprofilstärke 10 von 0,1 mm bis 5,0 mm, bevorzugt von 0,5 mm bis 2,0 mm, auf. Die Unterprofilstärke 10 ist der minimale radiale Abstand zwischen einem Profilgrund 6 und einer radial äußeren Einhüllenden 14 der Stahl-Festigkeitsträger 5 einer radial äußersten Winkelgürtellage 41 der zumindest einen Winkelgürtellage 41, 42.

Eine radial äußerste Winkelgürtellage 41 der zumindest einen Winkelgürtellage 41,42 weist eine radial äußere Gummierungsdicke 8 von maximal 0,5 mm, bevorzugt maximal 0,1 mm, auf. Die radial äußere Gummierungsdicke 8 ist gemessen von der radial äußeren Einhüllenden 14 der Stahl-Festigkeitsträger 5 der radial äußersten Winkelgürtellage 41 nach radial außen.

Der zum indest eine Bandagen-Festigkeitsträger 9 kann ein Garn oder ein Kord sein. Der zumindest eine Bandagen-Festigkeitsträger 9 kann als Stahl-Festigkeitsträger ausgebildet sein. Ein geeigneter Stahl-Festigkeitsträger 9 kann ein Stahl-Kord insbesondere aus mehreren miteinander verdrehten Stahl-Monofilamenten sein. Als geeignet hat sich beispielsweise ein 3x3x0,2mm HE (high-elongation) Stahl-Kord herausgestellt. Der zumindest eine Bandagen-Festigkeitsträger 9 kann aber auch ein Hybrid-Festigkeitsträger, insbesondere ein Stahlhybrid-Festigkeitsträger oder ein Aramidhybrid-Festigkeitsträger, sein. Der zumindest eine Bandagen-Festigkeitsträger 9 kann auch ein Nylon-Festigkeitsträger sein. Es kann sich um einen Nylon-Kord insbesondere der Konstruktion 470x2 oder 1400x2 handeln.

Die Bandage 7 kann, wie dargestellt, in axialer Richtung aR durchgehend ausgebildet sein und axiale Enden 11 aufweisen, die jeweils axial innerhalb eines axialen Bereichs 16 angeordnet sind, der sich jeweils von 5 mm axial innerhalb einer Kante 15 der radial äußersten Winkelgürtellage 41 bis 5 mm axial außerhalb einer Gürtelkante 13 des Gürtels 4 erstreckt.

Dabei können die axialen Enden 11 insbesondere in einer axialen Entfernung 12 von maximal 5 mm von der jeweiligen Gürtelkante 13 des Gürtels (dargestellt) und/oder der jeweiligen Kante 15 der radial äußersten Winkelgürtellage 41 (nicht dargestellt) angeordnet sein.

Die Bandage 7 kann wie dargestellt einlagig ausgebildet sein, insbesondere ein einlagiges Spulbild aufweisen.

Die Karkasse 3 kann eine übliche Radialkarkasse mit zumindest einer Festigkeitsträgerlage aufweisend Festigkeitsträger, die mit der Umfangsrichtung U einen Winkel von 80° bis 90° und/oder in einem Bereich der Seitenwand einen Winkel von maximal 10° mit der radialen Richtung rR einschließen, sein.

### Bezugszeichenliste

- 1: Fahrzeugluftreifen
- 2: Laufstreifen
- 3: Karkasse
- 4: Gürtel
- 5: Stahl-Festigkeitsträger
- 6: Profilgrund
- 7: Bandage
- 8: Gummierungsdicke
- 9: Bandagen-Festigkeitsträger
- 10: Unterprofilstärke
- 11: axiales Ende
- 12: axiale Entfernung
- 13: Gürtelkante
- 14: Einhüllende
- 15: Kante
- 16: axialer Bereich
- 41: radial äußerste Winkelgürtellage
- 42: Winkelgürtellage
- U: Umfangsrichtung
- aR: axiale Richtung
- rR: radiale Richtung

## Patentansprüche

1. Fahrzeugluftreifen (1) aufweisend einen profilierten Laufstreifen (2), eine Karkasse (3) sowie einen Gürtel (4) aus zumindest einer Winkelgürtellage (41,42) aufweisend parallel zueinander angeordnete Stahl-Festigkeitsträger (5), die einen ersten Winkel von 15° bis 50° mit einer Umfangsrichtung U einschließen,
• wobei der Fahrzeugluftreifen (1) radial außerhalb der Karkasse (3) genau eine Bandage (7) aus zumindest einem in Umfangswindungen angeordneten, einen zweiten Winkel von maximal 10° mit der Umfangsrichtung U einschließenden und in elastomerem Material eingebetteten Bandagen-Festigkeitsträger (9) aufweist und
• wobei die Bandage (7) radial innerhalb des Gürtels (4) angeordnet ist und dass eine radial innerhalb auf die Bandage (7) folgende Festigkeitsträgerlage eine Festigkeitsträgerlage der Karkasse (3) ist,
**dadurch gekennzeichnet, dass**
• der Fahrzeugluftreifen eine Unterprofilstärke (10) von 0,5 mm bis 2,0 mm aufweist.

2. Fahrzeugluftreifen (1) gemäß Anspruch 1, **dadurch gekennzeichnet, dass** eine radial äußerste Winkelgürtellage (41) der zumindest einen Winkelgürtellage (41,42) eine radial äußere Gummierungsdicke (8) von maximal 0,5 mm, bevorzugt maximal 0,1 mm, aufweist.

3. Fahrzeugluftreifen (1) gemäß zumindest einem der vorhergehenden Ansprüche, **dadurch gekennzeichnet, dass** der zumindest eine Bandagen-Festigkeitsträger (9) ein Stahl-Festigkeitsträger oder ein Hybrid-Festigkeitsträger, insbesondere ein Stahlhybrid-Festigkeitsträger oder ein Aramidhybrid-Festigkeitsträger, oder ein Nylon-Festigkeitsträger ist.

4. Fahrzeugluftreifen (1) gemäß zumindest einem der vorhergehenden Ansprüche, **dadurch gekennzeichnet, dass** die Bandage (7) in axialer Richtung aR durchgehend ausgebildet ist und axiale Enden (11) aufweist, die jeweils axial innerhalb eines axialen Bereichs (16) angeordnet sind, der sich jeweils von 5 mm axial innerhalb einer Kante (15) der radial äußersten Winkelgürtellage (41) bis 5 mm axial außerhalb einer Gürtelkante (13) des Gürtels (4) erstreckt.

5. Fahrzeugluftreifen (1) gemäß zumindest dem vorhergehenden Anspruch, **dadurch gekennzeichnet, dass** die axialen Enden (11) in einer axialen Entfernung (12) von maximal 5 mm von der jeweiligen Gürtelkante (13) des Gürtels und/oder der jeweiligen Kante (15) der radial äußersten Winkelgürtellage 41 angeordnet sind.

6. Fahrzeugluftreifen (1) gemäß zumindest einem der vorhergehenden Ansprüche, **dadurch gekennzeichnet, dass** die Bandage (7) einlagig ausgebildet ist, insbesondere ein einlagiges Spulbild aufweist.

7. Fahrzeugluftreifen (1) gemäß zumindest einem der vorhergehenden Ansprüche, **dadurch gekennzeichnet, dass** der Gürtel (4) genau eine Winkelgürtellage (41) aufweist, wobei der erste Winkel der Stahl-Festigkeitsträger (5) 20° bis 50° beträgt.

8. Fahrzeugluftreifen (1) gemäß zumindest einem der vorhergehenden Ansprüche, **dadurch gekennzeichnet, dass** der Gürtel (4) genau zwei Winkelgürtellagen (5) aufweist, wobei die Stahl-Festigkeitsträger (5) der beiden Winkelgürtellagen (41, 42) eine gegenläufige Steigungsrichtung aufweisen und wobei der erste Winkel der jeweiligen Winkelgürtellage (41, 42) 15° bis 35° beträgt.

9. Fahrzeugluftreifen (1) gemäß zumindest einem der vorhergehenden Ansprüche, **dadurch gekennzeichnet, dass** es sich um einen Nutzfahrzeugreifen handelt.

## Claims

1. Pneumatic vehicle tyre (1) comprising a profiled tread (2), a carcass (3) and a belt (4) composed of at least one angled belt ply (41, 42) comprising steel strength members (5) which are arranged parallel to one another and form a first angle of 15° to 50° with a circumferential direction U,
• wherein radially outward of the carcass (3) the pneumatic vehicle tyre (1) comprises precisely one bandage (7) composed of at least one bandage strength member (9) which is arranged in circumferential windings, forms a second angle of at most 10° with the circumferential direction U and is embedded in elastomeric material and
• wherein the bandage (7) is arranged radially inside the belt (4) and a strength member ply which follows the bandage (7) in the radially inward direction is a strength member ply of the carcass (3), **characterized in that**
• the pneumatic vehicle tyre has a sub-profile thickness (10) of 0.5 mm to 2.0 mm.

2. Pneumatic vehicle tyre (1) according to Claim 1, **characterized in that** a radially outermost angled belt ply (41) of the at least one angled belt ply (41, 42) has a radially outer rubberization thickness (8) of at most 0.5 mm, preferably at most 0.1 mm.

3. Pneumatic vehicle tyre (1) according to at least one of the preceding claims, **characterized in that** the at least one bandage strength member (9) is a steel strength member or a hybrid strength member, in particular a steel hybrid strength member or an aramid hybrid strength member, or a nylon strength member.

4. Pneumatic vehicle tyre (1) according to at least one of the preceding claims, **characterized in that** the bandage (7) is continuous in the axial direction aR and has axial ends (11) which are each arranged axially within an axial region (16) which extends in each case from 5 mm axially inward of an edge (15) of the radially outermost angled belt ply (41) to 5 mm axially outward of a belt edge (13) of the belt (4).

5. Pneumatic vehicle tyre (1) according to at least the preceding claim, **characterized in that** the axial ends (11) are arranged at an axial distance (12) of at most 5 mm from the respective belt edge (13) of the belt and/or the respective edge (15) of the radially outermost angled belt ply 41.

6. Pneumatic vehicle tyre (1) according to at least one of the preceding claims, **characterized in that** the bandage (7) is in the form of a single ply, in particular has a single-ply winding pattern.

7. Pneumatic vehicle tyre (1) according to at least one of the preceding claims, **characterized in that** the belt (4) comprises precisely one angled belt ply (41), wherein the first angle of the steel strength members (5) is 20° to 50°.

8. Pneumatic vehicle tyre (1) according to at least one of the preceding claims, **characterized in that** the belt (4) comprises precisely two angled belt plies (5), wherein the steel strength members (5) of the two angled belt plies (41, 42) have an opposed pitch direction and wherein the first angle of the respective angled belt ply (41, 42) is 15° to 35°.

9. Pneumatic vehicle tyre (1) according to at least one of the preceding claims, **characterized in that** said tyre is a commercial vehicle tyre.

## Revendications

1. Pneumatique de véhicule (1) présentant une bande de roulement profilée (2), une carcasse (3) et une ceinture (4) en au moins une couche de ceinture angulaire (41, 42) présentant des supports de résistance en acier (5) agencés parallèlement les uns aux autres, qui forment un premier angle de 15° à 50° avec une direction circonférentielle U,
• le pneumatique de véhicule (1) présentant radialement à l'extérieur de la carcasse (3) exactement un bandage (7) en au moins un support de résistance de bandage (9) agencé en spires circonférentielles, formant un deuxième angle de 10° maximum avec la direction circonférentielle U et noyé dans un matériau élastomère, et
• le bandage (7) étant agencé radialement à l'intérieur de la ceinture (4) et une couche de support de résistance suivant radialement à l'intérieur le bandage (7) étant une couche de support de résistance de la carcasse (3), **caractérisé en ce que**
• le pneumatique du véhicule présente une épaisseur de sous-profil (10) de 0,5 mm à 2,0 mm.

2. Pneumatique de véhicule (1) selon la revendication 1, **caractérisé en ce qu'**une couche de ceinture angulaire (41) radialement la plus extérieure de l'au moins une couche de ceinture angulaire (41, 42) présente une épaisseur de gommage (8) radialement extérieure de 0,5 mm maximum, de préférence de 0,1 mm maximum.

3. Pneumatique de véhicule (1) selon au moins l'une quelconque des revendications précédentes, **caractérisé en ce que** l'au moins un support de résistance de bandage (9) est un support de résistance en acier ou un support de résistance hybride, notamment un support de résistance hybride en acier ou un support de résistance hybride en aramide, ou un support de résistance en nylon.

4. Pneumatique de véhicule (1) selon au moins l'une quelconque des revendications précédentes, **caractérisé en ce que** le bandage (7) est réalisé continu dans la direction axiale aR et présente des extrémités axiales (11) qui sont chacune agencées axialement à l'intérieur d'une zone axiale (16) qui s'étend respectivement de 5 mm axialement à l'intérieur d'un bord (15) de la couche de ceinture angulaire radialement la plus extérieure (41) à 5 mm axialement à l'extérieur d'un bord de ceinture (13) de la ceinture (4).

5. Pneumatique de véhicule (1) selon au moins la revendication précédente, **caractérisé en ce que** les extrémités axiales (11) sont agencées à une distance axiale (12) de 5 mm maximum du bord de ceinture respectif (13) de la ceinture et/ou du bord respectif (15) de la couche de ceinture angulaire radialement la plus extérieure 41.

6. Pneumatique de véhicule (1) selon au moins l'une quelconque des revendications précédentes, **caractérisé en ce que** le bandage (7) est réalisé en une seule couche, notamment présente une configuration de bobinage en une seule couche.

7. Pneumatique de véhicule (1) selon au moins l'une quelconque des revendications précédentes, **caractérisé en ce que** la ceinture (4) présente exactement une couche de ceinture angulaire (41), le premier angle des supports de résistance en acier (5) étant de 20° à 50°.

8. Pneumatique de véhicule (1) selon au moins l'une quelconque des revendications précédentes, **caractérisé en ce que** la ceinture (4) présente exactement deux couches de ceinture angulaires (5), les supports de résistance en acier (5) des deux couches de ceinture angulaires (41, 42) présentant une direction d'inclinaison opposée et le premier angle de la couche de ceinture angulaire respective (41, 42) étant de 15° à 35°.

9. Pneumatique de véhicule (1) selon au moins l'une quelconque des revendications précédentes, **caractérisé en ce qu'**il s'agit d'un pneumatique de véhicule utilitaire.
